# EUROPEAN PATENT APPLICATION

(11) **EP 4 382 368 A1**
(43) Date of publication of application: **12.06.2024**
(21) Application number: 22211442.3
(22) Date of filing: 05.12.2022
(51) Int. Cl.: B60R 21/015, B60R 21/203

(54) **CRASH MONITORING SYSTEM**

(71) Applicant: Volvo Car Corporation, 405 31 Göteborg (SE)
(72) Inventor: SASLECOV, Venti, 40531 Göteborg (SE); BJÖRKLUND, Magnus, 40531 Göteborg (SE); KLOMP, Matthijs, 40531 Göteborg (SE)
(74) Representative: Maiwald GmbH

(57) **Abstract**

The present disclosure relates to a crash monitoring system for a vehicle, a vehicle comprising such crash monitoring system, a crash monitoring method and a computer program element for such crash monitoring system.

The crash monitoring system comprises a steering wheel, an airbag unit with an inflatable bag, a crash sensor unit and a control unit. The steering wheel is formed noncircular. The airbag unit being arrangeable facing a driver seat in the vehicle. The crash sensor unit is configured to generate crash information of an imminent crash event. The crash information comprises at least a speed of the vehicle, a crash direction, a crash severity and a driving path of the vehicle. The control unit is configured to determine based on the crash information a rotation angle of the noncircular steering wheel, at which the inflatable bag is able to be deployed to uniformly absorb impact energy form a driver sitting towards the steering wheel. The control unit is configured to rotate the steering wheel by the determined rotation angle in case of a crash event.

## Description

### TECHNICAL FIELD

The present disclosure relates to a crash monitoring system for a vehicle, a vehicle comprising such crash monitoring system, a crash monitoring method and a computer program element for such crash monitoring system.

### BACKGROUND ART

Steer-by-wire steering systems for motor vehicles comprise no direct mechanical coupling between a steering wheel and steered wheels of the motor vehicle. Instead, a steering angle, a rotational speed and/or a torque applied to the steering wheel are detected by a suitable sensor system and transmitted in the form of an electrical control value to an electromechanical steering actuator unit, which converts the electrically specified steering signal into a mechanical adjustment of a steerable vehicle axle.

Such steer-by-wire steering systems allow various design of the steering wheel, which can be formed ergonomically but not necessarily round. However, the noncircular steering wheel needs to ensure a reliable and optimal deployment of an airbag during a crash, which is generally arranged inside the steering wheel.

### SUMMARY

Hence, there may be a need to provide an improved crash monitoring system, which facilitates a reliable deployment of an airbag arranged close to an ergonomic steering wheel.

The problem is at least partially solved or alleviated by the subject matter of the independent claims of the present disclosure, wherein further examples are incorporated in the dependent claims. It should be noted that the aspects of the disclosure described in the following apply to the crash monitoring system for a vehicle, the vehicle comprising such crash monitoring system, the crash monitoring method and the computer program element for such crash monitoring system.

According to the present disclosure, a crash monitoring system for a vehicle is presented. The crash monitoring system comprises a steering wheel, an airbag unit with an inflatable bag, a crash sensor unit and a control unit. The steering wheel is formed noncircular. The airbag unit is arrangeable facing a driver's seat in the vehicle. The crash sensor unit is configured to generate crash information of an imminent crash event. The crash information comprises at least a speed of the vehicle, a crash direction, a crash severity and a driving path of the vehicle. The control unit is configured to determine based on the crash information a rotation angle of the noncircular steering wheel, at which the inflatable bag is able to be deployed to uniformly absorb impact energy from a driver sitting towards the steering wheel. The control unit is configured to rotate the steering wheel by the determined rotation angle in case of a crash event.

The crash monitoring system according to the present disclosure enables an optimal deployment of the airbag accommodated in or arranged close to the noncircular steering wheel by rotating the noncircular steering wheel to an optimal position based on a current driving situation, when a crash is detected to be imminent. Accordingly, safety of the vehicle can be enhanced.

The steering wheel may be formed ergonomically, which may allow a user a comfortable operation of the steering wheel. Generally, such steering wheel may be formed in a various shape, such as pilot steering wheel, butterfly steering wheel, yoke steering wheel, etc., which may be designed unsymmetrically. Further, such ergonomic steering wheel may be smaller than conventional round steering wheels to quickly implement the driver's input regarding steering angle, steering torque or the like. In an example, the steering wheel comprises an asymmetric width to height ratio.

The airbag unit may be a front airbag unit configured to reduce an injury risk to the driver in case of a crash event. Such front airbag unit, particularly its inflatable bag may be located inside an impact plate of the steering wheel. Alternatively, the airbag unit may be arranged in a dashboard facing the driver's seat. If the inflatable airbag needs to be deployed in case of the crash event, the airbag may be pushed out of the steering wheel or the dashboard and inflated to protect the driver sitting in front of the steering wheel.

When the inflatable bag is inflated, the steering wheel may serve as a backbone to support a reliable deployment of the inflatable bag. However, if the steering wheel is small and/or not round, the steering wheel may not be able to support the airbag evenly over an entire area of the steering wheel facing the deployed airbag.

The crash sensor unit may comprise a plurality of sensor elements configured to monitor an environment of the imminent crash event. The crash sensor unit may comprise at least one of a lidar element, a radar element, an ultrasonic element or an optical imaging element. The sensor elements may be configured to monitor surroundings of the vehicle and generate field data of the imminent crash event.

Thus, the plurality of sensor elements of the crash sensor unit may be able to generate crash information regarding the speed of the vehicle, the crash direction, the crash severity and the driving path of the vehicle. In addition, the crash sensor unit may be able to identify any physical properties of an obstacle to be crashed such as type, size, shape and/or predicted time to crash. Additionally, the crash information may be associated with occupant size, head position as well as occupant seat position and sitting posture.

The control unit may be a part of an electronic control unit (ECU) of the vehicle and adapted to receive the crash information from the crash sensor unit. Accordingly, the control unit may be able to identify, in which direction the obstacle is situated, from which direction the imminent crash can be occurred, how the current driving path of the vehicle runs, etc.

Based on such information, the control unit may be able to determine an optimal supporting direction of the noncircular steering wheel, when the inflatable bag is deployed. Specifically, the inflatable bag should protect the driver evenly over the entire deployed area of the inflatable bag. In other words, the inflatable bag may be able to uniformly absorb impact energy from the driver, in case of the crash event.

Accordingly, the control unit may be configured to determine the rotation angle of the noncircular steering wheel based on the crash information generated by the crash sensor unit and rotate the noncircular steering wheel by the determined rotation angle to reliably deploy the inflatable bag and enhance the safety of the vehicle.

In an example, the control unit may be configured to receive manufacturer specification information of the steering wheel and/or the airbag unit. The control unit may be configured to determine the rotation angle of the noncircular steering wheel based on the crash information and the manufacturer specification information. The manufacturer specification information may comprise any physical properties of the vehicle such as type of the vehicle, size and shape of the steering wheel, interior design, propulsion means, driving means, etc.

The control unit may be adapted to receive manufacturer specification information from a local data storage element via wired or wireless communication element and/or from a cloud-based data storage element over the air. Based on the crash information and the manufacturer specification information, the control unit may be able to precisely predict the imminent crash event in order to accurately determine the rotation angle of the noncircular steering wheel.

In an example, the inflatable bag is formed noncircular. The control unit is configured to determine based on the crash information the rotation angle of the noncircular steering wheel, at which the noncircular inflatable bag is able to be deployed to uniformly absorb impact energy from the driver.

To effectively and reliably protect the driver, the inflatable bag of the airbag unit may be formed polygonally instead of a circular shape. The control unit may be able to determine the rotation angle of the noncircular steering wheel for the deployment of the noncircular inflatable bag based on the crash information and/or the manufacturer specification information to reliably absorb the impact energy from the driver sitting towards the steering wheel.

In an example, the control unit is configured to receive operational information of the vehicle. The control unit is configured to determine the rotation angle of the steering wheel based on the crash information, the operational information, and optionally the manufacturer specification information. The crash monitoring system may comprise a vehicle information supplying unit, which may be configured to collect operational information of the vehicle.

In an example, the operational information may comprise speed, mass, current steering angle, physical property data, traffic management data of at least the vehicle and/or an obstacle of the imminent crash event. The operational information may comprise any physical and mechanical data, specification and/or property, which can influence an operation of the vehicle. Additionally or alternatively, the operational information may be related to operational decisions of the vehicle such as acceleration, braking, cruise control, lane changing, turning speed, etc.

By applying the crash information and the operational information for determining the rotation angle of the noncircular steering wheel, a precise adjustment of the noncircular steering wheel for reliable deployment of the inflatable airbag can be achieved. Accordingly, safety of the vehicle can be also enhanced.

In an example, the crash monitoring system further comprises a driver monitoring unit configured to generate posture information of the driver. The control unit is configured to determine the rotation angle of the steering wheel based on the crash information, the operational information and/or the posture information, and optionally the manufacturer specification information.

The driver monitoring unit may be configured to monitor the driver and perform any driver-related measurements such as a size, sitting posture, head position, sitting position of the driver, etc. and generate the posture information of the driver based on such measurements. The driver monitoring unit may utilize various devices and/or sensor elements to monitor the driver. Thus, by applying the crash information, the operational information and/or the posture information of the driver for determining the rotation angle of the noncircular steering wheel, a precise adjustment of the steering wheel can be realized.

In an example, the control unit is configured to rotate the steering wheel by the rotation angle within a period of time, in which the inflatable bag is at least partially deployed. The control unit may be adapted to activate the airbag unit shortly prior to the crash event, for instance 40 ms ahead. As soon as the control unit identifies that the imminent crash event cannot be avoided, the control unit may be adapted to rotate the noncircular steering wheel by the determined rotation angle, at which the inflatable bag is able to be deployed to uniformly absorb impact energy from the driver sitting towards the steering wheel. During rotating the steering wheel, the inflatable bag of the airbag unit may be at least partially deployed out of the impact plate of the steering wheel or the dashboard, to accelerate the deployment of the inflatable bag.

In an example, the control unit is configured to retract the steering wheel in direction to a dashboard of the vehicle in case of the crash event. The control unit may be adapted to determine whether there is enough place to reliably rotate the noncircular steering wheel and deploy the inflatable bag based on the crash information, the manufacturer specification information, the operational information and/or the posture information.

If the control unit identifies that the inflatable bag may be deployed more effectively, when there is more space, the control unit may initiate the steering wheel to be retracted towards the dashboard of the vehicle to obtain additional space before rotating the noncircular steering wheel.

In an example, the control unit is configured to rotate the steering wheel to a predetermined driving position of the steering wheel. The predetermined driving position may be a straightforward driving position. The control unit may determine that the noncircular steering wheel may provide the safest support to the airbag unit at an initial position, at which the steering wheel is not rotated. The initial position of the noncircular steering wheel may correspond to the straightforward driving position of the steering wheel, at which the rotation angle of the steering wheel is equal to zero.

Alternatively, the predetermined driving position may be any specific rotation angle determined mainly based on the manufacturer specification information.

Further, control unit may also initiate the steering wheel to rotate to the predetermined position, if the control unit may not be able to determine the rotation angle of the steering wheel in good time prior to the imminent crash event.

In an example, the steering wheel is operable by steer-by-wire. Accordingly, the noncircular steering wheel does not comprise any direct mechanical coupling between the steering wheel and steered wheels of the vehicle, but the steering wheel may be operated by an electrical control. Accordingly, various ergonomic shape of the steering wheel may be available, which may also need to satisfy safety requirements.

In an example, the steering wheel may be formed in a yoke shape. The crash monitoring system may be adapted preferably for such noncircular steering wheel to ensure a uniform absorption of the impact energy from the driver in case of the crash event.

In an example, the control unit is configured to electrically detach the steering wheel in case of the crash event. When rotating the noncircular steering wheel for preparing the imminent deployment of the inflatable bag, the control unit may electrically detach the steering wheel from the wheel to be steered to prevent undesired steering of the wheels.

In an example, the control unit is configured to activate at least one of a front airbag element, a knee airbag element, a lateral airbag element or an inflammatory side curtain together with the airbag unit arranged facing the driver's seat in case of the crash event. In addition to the inflatable bag arranged facing the driver's seat, further protecting means may be provided inside the vehicle. Such various airbag elements may be individually and properly activated to avoid a secondary injury caused due to an incorrect actuation of the protecting means. Accordingly, safety of the vehicle may be enhanced.

According to the present disclosure, a vehicle is also presented. The vehicle comprises a crash monitoring system as described above.

According to the present disclosure, a crash monitoring method is also presented. The method comprises, not necessarily in this order,
- monitoring an imminent crash event and generating crash information of the imminent crash event, the crash information comprising at least a speed of the vehicle, a crash direction, a crash severity and a driving path of the vehicle,
- determining based on the crash information a rotation angle of a noncircular steering wheel, at which an inflatable bag being able to be deployed to uniformly absorb impact energy from a driver sitting towards the steering wheel, and
- rotating the steering wheel by the determined rotation angle in case of a crash event.

The steering wheel is formed noncircular. The airbag unit is arrangeable facing a driver's seat in the vehicle.

According to the present disclosure, a computer program element is also presented. The computer program element is configured for a crash monitoring system as described above. The computer program element is adapted to perform the crash monitoring method steps as described above, when executed by a processing element.

According to the present disclosure, one or more computer storage media may be presented. The computer storage media is encoded with instructions, that when executed by a computer, cause the computer to perform the operations of the respective method as described above.

The storage media may comprise internal to a computing device, such as a computer's SSD, or a removable device such as an external HDD or universal serial bus (USB) flash drive. There are also other types of storage media, including magnetic tape, compact discs (CDs) and non-volatile memory (NVM) cards.

It should be noted that the above examples may be combined with each other irrespective of the aspect involved. Accordingly, the method may be combined with structural features and, likewise, the system may be combined with features described above with regard to the method.

These and other examples of the present disclosure will become apparent from and elucidated with reference to the embodiments described hereinafter.

### BRIEF DESCRIPTION OF DRAWINGS

Examples according to the present disclosure will be described in the following with reference to the following drawings.
- Fig. 1: shows schematically an example of a crash monitoring system according to the present disclosure.
- Fig. 2: shows schematically an example of a crash monitoring method according to the present disclosure.
- Fig. 3: shows schematically an example of a conventional crash monitoring system in case of a crash event.
- Fig. 4: shows schematically an example of a crash monitoring system according to the present disclosure in case of a crash event.

### DESCRIPTION OF EXAMPLES

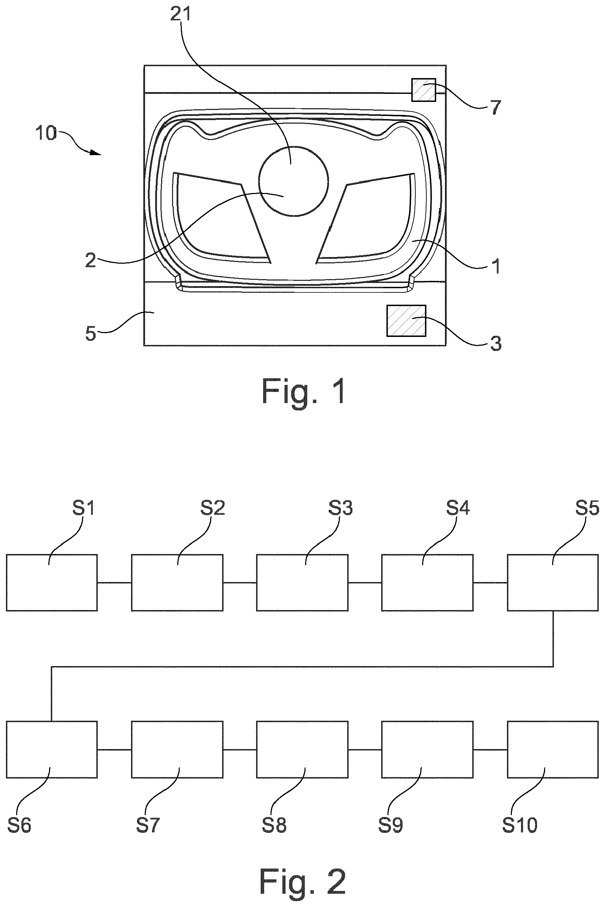

Fig. 1 shows a crash monitoring system 10 adapted for a noncircular steering wheel 1 such as a yoke-shaped steering wheel for a vehicle, which may be operated by steer-by-wire. Thus, the noncircular steering wheel 1 does not comprise any direct mechanical coupling between the steering wheel 1 and steered wheels of the vehicle.

The crash monitoring system 10 comprises the noncircular steering wheel 1, an airbag unit 2 with an inflatable bag 21, a crash sensor unit 3 and a control unit (not shown). The airbag unit 2 is a front airbag unit 2 and arranged inside the steering wheel 1. The inflatable bag 21 of the airbag unit 2 may comprise a noncircular shape, when deployed.

The crash sensor unit 3 comprises a plurality of sensor elements configured to monitor an imminent crash event. The crash sensor unit 3 is configured to generate crash information of the imminent crash event. The crash monitoring system 10 further comprises a driver monitoring unit 7 configured to generate posture information of a driver 4.

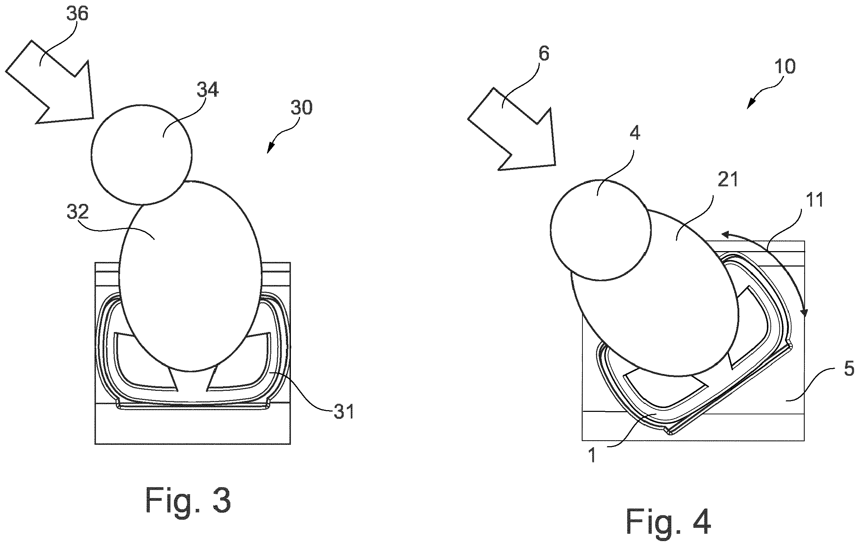

The control unit is configured to determine a rotation angle 11 of the noncircular steering wheel 1 based on the crash information, at which the inflatable bag 21 is able to be deployed to uniformly absorb impact energy 6 from the driver 4 sitting towards the steering wheel 1 (see also Fig. 4). Particularly, the control unit can be configured to rotate the steering wheel 1 by the rotation angle 11 within a period of time, in which the inflatable bag 21 is at least partially deployed.

The control unit is adapted to perform the crash monitoring as shown in Fig. 2, but not necessarily in this order:

| | |
|---|---|
| S 1 | receiving manufacturer specification information of a noncircular steering wheel 1 and/or an airbag unit 2 of a vehicle; |
| S2 | receiving operational information of the vehicle, wherein the operational information comprises speed, mass, current steering angle, physical property data, traffic management data of at least the vehicle and/or an obstacle of an imminent crash event; |
| S3 | receiving posture information of a driver 4 comprising at least a size, a sitting posture, a head position and a sitting position of the driver 4; |
| S4 | receiving crash information comprising at least a speed of the vehicle, a crash direction, a crash severity and a driving path of the vehicle; |
| S5 | determining an imminent crash event; |
| S6 | determining a rotation angle 11 of the steering wheel 1 based on the crash information, the manufacturer specification information, the operational information and/or the posture information; |
| S7 | retracting the steering wheel 1 in direction to a dashboard 5 of the vehicle in case of the crash event; |
| S8 | electrically detaching the steering wheel 1; |
| S9 | rotating the steering wheel 1 by the determined rotation angle 11; |
| S10 | deploying the inflatable bag 21 of the airbag unit 2. |

Fig. 3 shows a conventional crash monitoring system 30 comprising a noncircular steering wheel 31. In case of a crash event, the conventional crash monitoring system 30 is generally adapted to deploy an inflatable bag 32 of a front airbag unit arranged in the steering wheel 31 without considering a steered position of the steering wheel, crash situation and/or a posture of the driver 34. Accordingly, despite a deployment of the inflatable bag 32, the driver 34 may not be protected appropriately from crash impact 36.

In contrast, as shown in Fig. 4, the crash monitoring system 10 according to the present disclosure allows a rotation of the noncircular steering wheel 1 by the determined rotation angle 11 in case of a crash event to optimize the deployment of the inflatable bag 21 of the airbag unit 2. Since the rotation angle 11 of the steering wheel 1 is to be determined based on the crash information, the operational information, the posture information, the manufacturer specification information, etc., the driver 4 may be reliably protected by the airbag unit 2 in case of the crash event.

It has to be noted that examples of the disclosure are described with reference to different subject matters. In particular, some examples are described with reference to method type claims whereas other examples are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed examples. Other variations to the disclosed examples can be understood and effected by those skilled in the art in practicing a claimed disclosure, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A crash monitoring system (10) for a vehicle, comprising,
- a steering wheel (1),
- an airbag unit (2) with an inflatable bag (21),
- a crash sensor unit (3), and
- a control unit,
the steering wheel (1) being formed noncircular,
the airbag unit (2) being arrangeable facing a driver's seat in the vehicle ,
the crash sensor unit (3) being configured to generate crash information of an imminent crash event,
the crash information comprising at least one of a speed of the vehicle, a crash direction, a crash severity and a driving path of the vehicle or a combination thereof,
the control unit being configured to determine based on the crash information a rotation angle (11) of the noncircular steering wheel (1), at which the inflatable bag (21) being able to be deployed to uniformly absorb impact energy (6) from a driver (4) sitting towards the steering wheel (1), and
the control unit being configured to rotate the steering wheel (1) by the determined rotation angle (11) in case of a crash event.

2. The crash monitoring system (10) according to claim 1, the steering wheel (1) comprising an asymmetric width to height ratio.

3. The crash monitoring system (10) according to claim 1, the inflatable bag (21) being formed noncircular, and the control unit being configured to determine based on the crash information the rotation angle (11) of the noncircular steering wheel (1), at which the noncircular inflatable bag (21) being able to be deployed to uniformly absorb impact energy (6) from the driver (4).

4. The crash monitoring system (10) according to any of the preceding claims, the control unit being configured to receive operational information of the vehicle, and the control unit being configured to determine the rotation angle (11) of the steering wheel (1) based on the crash information and the operational information.

5. The crash monitoring system (10) according to any of the preceding claims, further comprising a driver monitoring unit (7), the driver monitoring unit (7) being configured to generate posture information of the driver (4), and
the control unit being configured to determine the rotation angle (11) of the steering wheel (1) based on the crash information, the operational information and/or the posture information.

6. The crash monitoring system (10) according to any of the preceding claims, the control unit being configured to rotate the steering wheel (1) by the rotation angle (11) within a period of time, in which the inflatable bag (21) being at least partially deployed.

7. The crash monitoring system (10) according to any of the preceding claims, the inflatable bag (21) of the airbag unit (2) comprising a noncircular shape, when deployed.

8. The crash monitoring system (10) according to any of the preceding claims, the control unit being configured to retract the steering wheel (1) in direction to a dashboard (5) of the vehicle in case of the crash event.

9. The crash monitoring system (10) according to any of the preceding claims, the control unit being configured to rotate the steering wheel (1) to a predetermined driving position of the steering wheel (1).

10. The crash monitoring system (10) according to any of the preceding claims, the steering wheel (1) being operable by steer-by-wire.

11. The crash monitoring system (10) according to the preceding claim, the control unit being configured to electrically detach the steering wheel (1) in case of the crash event.

12. The crash monitoring system (10) according to any of the preceding claims, the control unit being configured to activate at least one of a front airbag element, a knee airbag element, a lateral airbag element or an inflammatory side curtain together with the airbag unit (2) arranged in the steering wheel (1) in case of the crash event.

13. A vehicle, the vehicle comprising the crash monitoring system (10) according to any of the preceding claims 1 to 12.

14. A crash monitoring method, the method comprising,
- monitoring (S4) an imminent crash event and generating crash information of the imminent crash event, the crash information comprising at least one of a speed of the vehicle, a crash direction, a crash severity and a driving path of the vehicle or a combination thereof,
- determining (S6) based on the crash information a rotation angle (11) of a noncircular steering wheel (1), at which an inflatable bag (21) being able to be deployed to uniformly absorb impact energy (6) from a driver (4) sitting towards the steering wheel (1), and
- rotating (S9) the steering wheel (1) by the determined rotation angle (11) in case of a crash event,
the steering wheel (1) being formed noncircular, and an airbag unit (2) arrangeable facing a driver's seat in the vehicle.

15. A computer program element for a crash monitoring system (10) according to any of the preceding claims 1 to 12, which, when being executed by a processing element, is adapted to perform the method steps according to claim 14.

## Amended claims

### Amended claims in accordance with Rule 137(2) EPC.

1. A crash monitoring system (10) for a vehicle, comprising,
- a steering wheel (1),
- an airbag unit (2) with an inflatable bag (21),
- a crash sensor unit (3), and
- a control unit,
the steering wheel (1) being formed noncircular,
the airbag unit (2) being arrangeable facing a driver's seat in the vehicle ,
the crash sensor unit (3) being configured to generate crash information of an imminent crash event,
the crash information comprising at least one of a speed of the vehicle, a crash direction, a crash severity and a driving path of the vehicle or a combination thereof,
the control unit being configured to determine based on the crash information a rotation angle (11) of the noncircular steering wheel (1), at which the inflatable bag (21) being able to be deployed to uniformly absorb impact energy (6) from a driver (4) sitting towards the steering wheel (1) for protecting the driver (4) evenly over the entire deployed area of the inflatable bag (21), and
the control unit being configured to rotate the steering wheel (1) by the determined rotation angle (11) in case of a crash event.

2. The crash monitoring system (10) according to claim 1, the steering wheel (1) comprising an asymmetric width to height ratio.

3. The crash monitoring system (10) according to claim 1, the inflatable bag (21) being formed noncircular, and the control unit being configured to determine based on the crash information the rotation angle (11) of the noncircular steering wheel (1), at which the noncircular inflatable bag (21) being able to be deployed to uniformly absorb impact energy (6) from the driver (4).

4. The crash monitoring system (10) according to any of the preceding claims, the control unit being configured to receive operational information of the vehicle, and
the control unit being configured to determine the rotation angle (11) of the steering wheel (1) based on the crash information and the operational information.

5. The crash monitoring system (10) according to any of the preceding claims, further comprising a driver monitoring unit (7), the driver monitoring unit (7) being configured to generate posture information of the driver (4), and
the control unit being configured to determine the rotation angle (11) of the steering wheel (1) based on the crash information, the operational information and/or the posture information.

6. The crash monitoring system (10) according to any of the preceding claims, the control unit being configured to rotate the steering wheel (1) by the rotation angle (11) within a period of time, in which the inflatable bag (21) being at least partially deployed.

7. The crash monitoring system (10) according to any of the preceding claims, the inflatable bag (21) of the airbag unit (2) comprising a noncircular shape, when deployed.

8. The crash monitoring system (10) according to any of the preceding claims, the control unit being configured to retract the steering wheel (1) in direction to a dashboard (5) of the vehicle in case of the crash event.

9. The crash monitoring system (10) according to any of the preceding claims, the control unit being configured to rotate the steering wheel (1) to a predetermined driving position of the steering wheel (1).

10. The crash monitoring system (10) according to any of the preceding claims, the steering wheel (1) being operable by steer-by-wire.

11. The crash monitoring system (10) according to the preceding claim, the control unit being configured to electrically detach the steering wheel (1) in case of the crash event.

12. The crash monitoring system (10) according to any of the preceding claims, the control unit being configured to activate at least one of a front airbag element, a knee airbag element, a lateral airbag element or an inflammatory side curtain together with the airbag unit (2) arranged in the steering wheel (1) in case of the crash event.

13. A vehicle, the vehicle comprising the crash monitoring system (10) according to any of the preceding claims 1 to 12.

14. A crash monitoring method, the method comprising,
- monitoring (S4) an imminent crash event and generating crash information of the imminent crash event, the crash information comprising at least one of a speed of the vehicle, a crash direction, a crash severity and a driving path of the vehicle or a combination thereof,
- determining (S6) based on the crash information a rotation angle (11) of a noncircular steering wheel (1), at which an inflatable bag (21) being able to be deployed to uniformly absorb impact energy (6) from a driver (4) sitting towards the steering wheel (1) for protecting the driver (4) evenly over the entire deployed area of the inflatable bag (21), and
- rotating (S9) the steering wheel (1) by the determined rotation angle (11) in case of a crash event,
the steering wheel (1) being formed noncircular, and an airbag unit (2) arrangeable facing a driver's seat in the vehicle.

15. A computer program element for a crash monitoring system (10) according to any of the preceding claims 1 to 12, which, when being executed by a processing element, is adapted to perform the method steps according to claim 14.
